# EUROPEAN PATENT APPLICATION

(11) **EP 4 579 789 A1**
(43) Date of publication of application: **02.07.2025**
(21) Application number: 24211983.2
(22) Date of filing: 11.11.2024
(51) Int. Cl.: H01M 4/133, H01M 4/134, H01M 4/36, H01M 4/38, H01M 4/62, H01M 4/02, H01M 4/587, H01M 10/0525

(54) **NEGATIVE ELECTRODE FOR RECHARGEABLE LITHIUM BATTERY AND RECHARGEABLE LITHIUM BATTERY INCLUDING SAME**

(30) Priority: 15.12.2023 KR 20230183533
(71) Applicant: SAMSUNG SDI CO., LTD., Yongin-si, Gyeonggi-do 17084 (KR); Korea Electronics Technology Institute, Bundang-gu, Seongnam-si Gyeonggi-do 13509 (KR)
(72) Inventor: Jeon, Seongho, 17084 Yongin-si, Gyeonggi-do (KR); Jeong, Goojin, 13509 Seongnam-si, Gyeonggi-do (KR); Kim, Hyun-seung, 13509 Seongnam-si, Gyeonggi-do (KR); Kim, Ho, 17084 Yongin-si, Gyeonggi-do (KR)
(74) Representative: Michalski Hüttermann & Partner Patentanwälte mbB

(57) **Abstract**

A negative electrode for a rechargeable lithium battery and a rechargeable lithium battery including the same are disclosed. The negative electrode for a rechargeable lithium battery includes a negative electrode active material layer including: an agglomerated product where at least one, e.g., two or more porous conductive material particle have pores are agglomerated, wherein pores of the adjacent porous conductive material particles in the agglomerated product are interconnected with each other.

## Description

### BACKGROUND

### (a) Field

Embodiments relate to a negative electrode active material for a rechargeable lithium battery and a rechargeable lithium battery including the same.

### (b) Description of the Related Art

For charging rechargeable lithium batteries at relatively high rates, the investigation for thinning of the electrode has been progressed (investigation has been conducted for thinner electrodes). A Si-based active material has gained attention as a relatively high-capacity active material for preparing a high capacity electrode per the same area with a thin layer.

Si-based active material has been reported to maintain a sufficient concentration of lithium salts in the electrode to achieve sufficient reactivity of the electrode during relatively high-rate charging (See also, e.g., J. Electrochem. Soc., 2021, 168, 040523, the entire content of which is incorporated herein by reference, or the like).

### SUMMARY

Aspects according to one or more embodiments are directed toward a negative electrode for a rechargeable lithium battery exhibiting excellent or suitable relatively high-rate charge and discharge characteristics.

Aspects according to one or more embodiments are directed toward a rechargeable lithium battery including the negative electrode.

Additional aspects will be set forth in part in the description which follows and, in part, will be apparent from the description, or may be learned by practice of the presented embodiments of the disclosure.

According to one or more embodiments, a negative electrode for a rechargeable lithium battery includes a negative electrode active material layer including:
an agglomerated product where at least one, e.g., two or more porous conductive material particles having pores are agglomerated; and
a negative electrode active material, wherein the pores of the adjacent porous conductive material particles within the agglomerated product are interconnected with each other.

According to one or more embodiments, a rechargeable lithium battery including the negative electrode; a positive electrode including a positive electrode active material; and an electrolyte.

Other embodiments are included in the following detailed description.

A negative electrode for a rechargeable lithium battery according to one or more embodiments may exhibit improved relatively high-rate charge and discharge characteristics.

### BRIEF DESCRIPTION OF THE DRAWINGS

The accompanying drawings are included to provide a further understanding of the present disclosure and is incorporated in and constitute a part of this specification. The drawings illustrate embodiments of the present disclosure and, together with the description, serve to explain principles of the present disclosure.
FIG. 1 is a schematic view illustrating a structure of the conductive material according to one or more embodiments.
FIG. 2 is schematic view illustrating a rechargeable lithium battery according to one or more embodiments.
FIG. 3 is schematic view illustrating a rechargeable lithium battery according to one or more embodiments.
FIG. 4 is schematic view illustrating a rechargeable lithium battery according to one or more embodiments.
FIG. 5 is a TEM image of the conductive material utilized in Example 1.
FIG. 6 is a TEM image of the conductive material utilized in Comparative Example 1.
FIG. 7 is a graph showing the high-rate charge and discharge characteristic of the cell according to Example 1.
FIG. 8 is a graph showing the high-rate charge and discharge characteristic of the cell according to Comparative Example 1.
FIG. 9 is an image showing the surface of the negative electrode obtained from the cell according to Comparative Example 1, which was subjected to the high-rate charge and discharge experiment of FIG. 8.
FIG. 10 is a graph showing the cycle-life characteristic and columbic efficiency of the cell according to Example 1 and Comparative Example 1.

### DETAILED DESCRIPTION

Hereinafter, embodiments are described in more detail. However, these embodiments are examples, and the present disclosure is not limited thereto. The scope of the present disclosure is defined by the claims and equivalents thereof.

Terms used in the specification is used to explain embodiments, but are not intended limit the scope of the present disclosure. Expressions in the singular include expressions in plural unless the context clearly dictates otherwise.

The term "combination thereof may include a mixture, a laminate, a complex, a copolymer, an alloy, a blend, and/or a reactant of the constituents.

The term "comprise", "include" or "have" are intended to designate that the stated (performed) characteristics, numbers, (e.g., act or task) step, constituted elements, or a (e.g., any suitable) combination thereof is present, but it should be understood that the possibility of presence or addition of one or more other characteristics, numbers, steps, constituted element, or a (e.g., any suitable) combination thereof are not to be precluded.

As used herein, unless explicitly described to the contrary, the word "comprise" and variations thereof such as "comprises" or "comprising" will be understood to imply the inclusion of stated elements but not the exclusion of any other element(s).

The term "thickness" may be measured through an image taken with an optical or electron microscope such as a scanning electron microscope (SEM).

As used herein, if (e.g., when) a definition is not otherwise provided, a particle diameter may be an average particle diameter. Such a particle diameter indicates an average particle diameter (D50) where a cumulative volume is about 50 volume% in a particle size distribution. If a particle has a spherical shape, a diameter indicates a particle diameter or average particle diameter, and if a particle has a non-spherical shape, a diameter indicates a length of a longer axis or an average length of a longer axis. The average particle diameter (D50) may be measured by a suitable method (e.g., known to those skilled in the art), for example, by a particle size analyzer, or by a transmission electron microscope (TEM) image, a scanning electron microscope image, or a field emission scanning electron microscopy (FE-SEM) image. In one or more embodiments, a dynamic light-scattering measurement device is utilized to perform a data analysis, and the number of particles is counted for each particle size range, and from this, the average particle diameter (D50) value may be easily obtained through a calculation. In some embodiments, a laser diffraction method may be utilized by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle distribution obtained in the measuring device.

A negative electrode for a rechargeable lithium battery according to one or more embodiments includes a negative electrode active material layer including:
an agglomerated product where at least one, e.g., two or more porous conductive material particles having pores are agglomerated; and
a negative electrode active material, wherein pores of the adjacent porous conductive material particles within the agglomerated product are interconnected with each other.

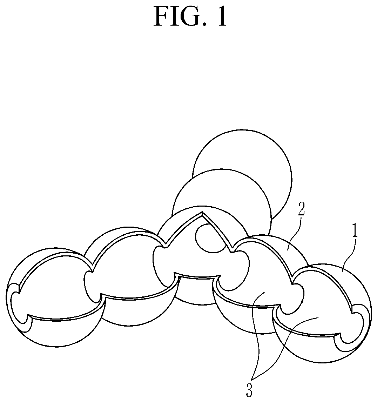

In one or more embodiments, the agglomerated product) where the porous conductive materials (porous conductive material particles) are agglomerated is such that pores included in the adjacent porous conductive material (porous conductive material particle) are interconnected, and as shown in FIG. 1, pores 3 of one conductive material particle 1 and another conductive material particle 2 in contact with this conductive material particle 1 are interconnected. A structure in which pores are interconnected represents that the pores are interconnected with each other, having no surface separating the area where the pores are contacted therewith, for example, a peanut-like shape. FIG. 1 schematically shows the agglomerated product of the porous conductive material, but the type or kind of the agglomerated product of the porous conductive material is not limited thereto, and for example, it may be a substantially spherical shape by agglomerating the porous conductive material particles.

An application of the agglomerated product where the porous conductive material particles including pores inside are agglomerated, for example, the pores inside are interconnected to each other, to the negative electrode may render to facilitate or enhance the supply of lithium ions throughout the negative electrode and may reduce the resistance during insertion and desertion of lithium ions into/from the negative electrode. The negative electrode may include lithium ions in sufficient amounts, thereby preventing or reducing depletion of lithium within the negative electrode during relatively high-rate charging and discharging, and lithium ions may be sufficiently inserted into the negative electrode, thereby preventing or reducing the precipitation of lithium on the surface of the negative electrode during relatively high-rate charging.

The porous conductive material (porous conductive material particle) includes pores inside, and these pores may serve as spaces for electrolyte impregnation, so that the negative electrode including the agglomerated product of the porous conductive material (porous conductive material particles), may be sufficiently impregnated with the electrolyte. This may render that the lithium salts included in the electrolyte may be sufficiently present in the negative electrode, thereby preventing or reducing depletion of lithium.

The related art carbonaceous conductive material without pores inside may not prevent or reduce the depletion and precipitation of lithium, as the electrolyte only penetrates the surface of such a conductive material. If the conductive material includes pores which are not interconnected with each other and are separated from each other, lithium ions may not be effectively transferred or transported in the electrolyte during charging, and thus, the depletion and precipitation of lithium may not be suitably prevented or reduced.

In some embodiment, an average diameter (e.g., average particle diameter) of the pores may be about 10 nm to about 150 nm, about 30 nm to about 150 nm, or about 50 nm to about 150 nm. If the average diameter (e.g., average particle diameter) satisfies these ranges, the electrolyte may be more sufficiently impregnated in the pores of the negative electrode (pores of the porous conductive material particles) in the battery including the negative electrode, thereby more effectively suppressing or reducing depletion of lithium. In one embodiment, the average diameter of the pores may be determined by using Image J via an optical microscope.

In one or more embodiments, the structure in which the pores included within at least one (e.g., two or more) porous conductive material particles are interconnected to each other, may be confirmed by a TEM image of the negative electrode, but the present disclosure is not limited thereto.

In one or more embodiments, the agglomerated products where the porous conductive materials are agglomerated, may be spherical. In one or more embodiments, the spherical shape may be a perfect sphere with the same horizontal and vertical length, or it may refer to one or more suitable shapes such as an oval shape.

As such, if the agglomerated product where the porous conductive materials are agglomerated, is spherical, it may realize higher electrode density than the plate shaped (e.g., in a form of plates) conductive material, and more excellent or suitable electrode density may be realized and the depletion and the precipitation of lithium may be more effectively suppressed or reduced.

In one or more embodiments, an amount of the agglomerated product may be, based on the total 100 wt% of the negative electrode active material layer, about 5 wt% or less, or about 0.1 wt% to about 5 wt%. If the amount of the agglomerated product is within these ranges, the depletion and the precipitation of lithium may be more effectively suppressed or reduced and the conductivity may be sufficiently improved.

The conductive material may be carbonaceous material. The carbonaceous conductive material is consisted of carbon and it may be amorphous, crystalline, or a (e.g., any suitable) combination thereof.

The agglomerated product where the porous conductive material particles are agglomerated according to one or more embodiments, may be prepared by coating carbon on the surface of a template including particles for preparing pores with a size corresponding to the desired or suitable pore size and removing the particles for preparing pores. The particles for preparing pores may be a metal oxide such as alumina, silica, and/or the like, and the removal may be carried out by an acid-treatment utilizing hydrochloric acid. However, the preparation of the agglomerated product where the porous conductive material particles are agglomerated is not limited thereto, and may be performed by any suitable techniques as long as the pores of the porous conductive material particles may be prepared into a structure in which they may be interconnected to each other.

In one or more embodiments, the negative electrode active material may be a carbon-based active material, a Si-based active material, or a (e.g., any suitable) combination thereof.

The carbon-based negative electrode active material may be, for example, crystalline carbon, amorphous carbon, or a (e.g., any suitable) combination thereof. The crystalline carbon may be graphite such as unspecified (e.g., irregularly) shaped, sheet-shaped, flake-shaped, sphere-shaped, or fiber-shaped natural graphite or artificial graphite, and the amorphous carbon may be soft carbon, hard carbon, mesophase pitch carbide, sintered coke, and/or the like.

The Si-based negative electrode active material may be silicon, a silicon-carbon composite, SiOₓ (0<x<2), Si-Q alloy (wherein Q is an alkali metal, an alkaline-earth metal, a Group 13 element, a Group 14 element (except for Si), Group 15 element, a Group 16 element, a transition metal, a rare earth element, or a (e.g., any suitable) combination thereof, and for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a (e.g., any suitable) combination thereof), or a (e.g., any suitable) combination thereof.

The silicon-carbon composite may be a composite of silicon and amorphous carbon. An average particle diameter (D₅₀) of the silicon-carbon composite may be about 0.5 µm to about 20 µm. According to one or more embodiments, the silicon-carbon composite may be in a form of silicon particles and amorphous carbon coated on the surface of the silicon particles. For example, the silicon-carbon composite may include a secondary particle (core) where primary silicon particles are agglomerated, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particle, and an amorphous carbon coating layer on a surface of the core. The crystalline carbon may be artificial graphite, natural graphite, or a (e.g., any suitable) combination thereof. The amorphous carbon may be soft carbon, hard carbon, mesophase pitch carbide, sintered coke, and/or the like.

If the silicon-carbon composite includes silicon and amorphous carbon, an amount of silicon may be, based on 100 wt% of the silicon-carbon composite, about 10 wt% to about 50 wt%, and an amount of the amorphous carbon may be about 50 wt% to about 90 wt%. In one or more embodiments, if the composite includes silicon, amorphous carbon, and crystalline carbon, based on 100 wt% of the silicon-carbon composite, an amount of silicon may be about 10 wt% to about 50 wt%, an amount of the crystalline carbon may be about 10 wt% to about 70 wt%, and an amount of the amorphous carbon may be about 20 wt% to about 40 wt%.

A thickness of the amorphous carbon coating layer may be about 5 nm to about 100 nm. An average particle diameter (D₅₀) of the silicon particle (primary particle) may be about 10 nm to about 1 µm, or about 10 nm to about 200 nm. The silicon particle may be presented in silicon itself, a silicon alloy, and/or an oxidized form. The oxidized silicon may be represented by SiOₓ (0<x≤2). An atomic weight ratio of Si:O representing a degree of oxidation may be about 99:1 to about 33:67. As used herein, an average particle diameter D₅₀ indicates a diameter of particle where the cumulative volume corresponds to about 50 volume% in the particle size distribution.

If the carbon-based active material and the Si-based active material are utilized together, a mixing ratio may be a weight ratio of about 1:99 to about 90:10.

In one or more embodiments, if the negative electrode includes the porous conductive material and the negative electrode active material, an amount of the negative electrode active material may be, based on the total 100 wt% of the negative electrode active material, about 95 wt% or more, or about 95 wt% to about 99.9 wt%.

In one or more embodiments, the negative electrode may further include a binder. If the negative electrode includes the porous conductive material, the negative electrode active material, and the binder, based on the total 100 wt% of the negative electrode active material layer, an amount of the porous conductive material may be about 5 wt% or less, or about 0.1 wt% to about 5 wt%, an amount of the negative electrode active material may be about 90 wt% to about 98.9 wt%, and an amount of the binder may be about 1 wt% to about 5 wt%.

The binder improves binding properties of negative electrode active material particles with one another and with a current collector. The binder may be a non-aqueous binder, an aqueous binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a (e.g., any suitable) combination thereof.

The negative electrode binder may include a cellulose-based compound. The cellulose-based compound includes one or more of carboxymethyl cellulose, hydroxypropylmethyl cellulose, methyl cellulose, or alkali metal salts thereof. The alkali metal may be Na, K, or Li.

The cellulose-based compound may impart viscosity as a thickener and may also serve as a binder. An amount of the cellulose-based compound is not limited. In one or more embodiments, the cellulose-based compound may be utilized by mixing with the aqueous binder, and a mixing ratio thereof may be appropriately or suitably adjusted.

The dry binder may be a polymer material that is capable of being fibrous (e.g., capable of having the shape of a fiber). For example, the dry binder may be polytetrafluoroethylene, polyvinylidene fluoride, a polyvinylidene fluoride-hexafluoropropylene copolymer, polyethyleneoxide, or a (e.g., any suitable) combination thereof.

The negative electrode according to one or more embodiments includes a negative electrode current collector supporting the negative electrode active material layer. The current collector may include one selected from among a copper foil, a nickel foil, a stainless steel foil, a titanium foil, a nickel foam, a copper foam, a polymer substrate coated with a conductive metal, or a (e.g., any suitable) combination thereof, but the present disclosure is not limited thereto.

The negative electrode according to one or more embodiments may be a relatively high-capacity negative electrode with a capacity per unit area of about 3.5 mAh/cm² or more, or about 4.0mAh/cm² to about 10.0 mAh/cm².

According to some embodiments, a rechargeable lithium battery includes the negative electrode, and the rechargeable lithium battery includes the negative electrode, a positive electrode, and an electrolyte. Hereinafter, configurations other than the negative electrode will be illustrated.

### Positive electrode

The positive electrode may include a current collector and a positive electrode active material layer on the current collector. The positive electrode active material layer includes a positive electrode active material and may further include a binder and/or a conductive material.

The positive electrode active material may include lithiated intercalation compounds that reversibly intercalate and deintercalate lithium ions. In one or more embodiments, at least one of a composite oxide of lithium and a metal selected from among cobalt, manganese, nickel, and/or a (e.g., any suitable) combination thereof may be utilized.

The composite oxide may be a lithium transition metal composite oxide, and specific examples thereof may include lithium nickel-based oxide, lithium cobalt-based oxide, lithium manganese-based oxide, lithium iron phosphate-based compound, cobalt-free nickel-manganese-based oxide, or a (e.g., any suitable) combination thereof.

For example, the positive electrode active material may be a relatively high nickel-based positive electrode active material having a nickel amount of greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. In the high nickel-based positive electrode active material, a nickel amount may be about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The relatively high-nickel-based positive electrode active material may realize relatively high capacity and may be applied to a relatively high-capacity, relatively high-density rechargeable lithium battery.

As an example, compounds represented by any one of the following chemical formulas may be utilized. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐDₐ (0.90≤a≤1.8, 0≤b≤0.5, 0≤c≤0.5, 0<α<2);LiₐNi_{1-b-c}Mn_{b}X_{c}O_{2-α}D_{α} (0.90≤a≤1.8, 0≤b≤0.5, 0≤c≤0.5, 0<α<2);LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8)

In the above chemical formulas, A is Ni, Co, Mn, or a (e.g., any suitable) combination thereof; X is Al, Ni, Co, Mn, Cr, Fe, Mg, Sr, V, a rare earth element or a (e.g., any suitable) combination thereof; D is O, F, S, P, or a (e.g., any suitable) combination thereof; G is Al, Cr, Mn, Fe, Mg, La, Ce, Sr, V, or a (e.g., any suitable) combination thereof; and L¹ is Mn, Al, or a (e.g., any suitable) combination thereof.

An amount of the positive electrode active material may be about 90 wt% to about 99.5 wt% based on 100 wt% of the positive electrode active material layer. An amount of the binder and/or the conductive material may be, based on 100 wt% of the positive electrode active material layer, about 0.5 wt% to about 5 wt%, respectively.

The binder improves binding properties of positive electrode active material particles with one another and with a current collector. Examples of the binder may include (e.g., may be) polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but the present disclosure is not limited thereto.

The conductive material is included to provide electrode conductivity, and any suitable electrically conductive material may be utilized as a conductive material unless it causes a chemical change. Examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder or a metal fiber including copper, nickel, aluminum, silver, and/or the like; a conductive polymer such as a polyphenylene derivative; or a (e.g., any suitable)mixture thereof.

The current collector may include Al, but the present disclosure is not limited thereto.

### Electrolyte

The electrolyte includes a non-aqueous organic solvent and a lithium salt.

The non-aqueous organic solvent serves as a medium for transmitting (e.g., transporting) ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes, and/or the like.

The organic solvent may be utilized alone or in a mixture of two or more. If the organic solvent is utilized in a mixture of two or more, the mixture ratio may be suitably controlled or selected in accordance with a desirable battery performance.

If the carbonate-based solvent is utilized, the cyclic carbonate and the linear carbonate may be utilized together, and the cyclic carbonate and the linear carbonate may be mixed at a volume ratio of about 1:1 to about 1:9.

The non-aqueous organic solvent may further include an aromatic hydrocarbon-based organic solvent. For example, the carbonate-based solvent and the aromatic hydrocarbon-based organic solvent may be mixed in a volume ratio of about 1:1 to about 30:1.

The electrolyte may further include vinylethyl carbonate, vinylene carbonate or an ethylene carbonate-based compound.

Examples of the ethylene carbonate-based compound may include fluoro ethylenecarbonate, difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like.

The lithium salt dissolved in an organic solvent supplies a battery with lithium ions, enables the basic operation of the rechargeable lithium battery, and improves transportation of the lithium ions between positive and negative electrodes. Examples of the lithium salt include at least one supporting electrolyte salt selected from among LiPF₆, LiBF₄, LiSbF₆, LiAsF₆, LiClO₄, LiAlO₂, LiAlCl₄, LiPO₂F₂, LiCl, Lil, LiN (SO₃C₂F₅)₂, Li(FSO₂)₂N (lithium bis(fluorosulfonyl)imide, LiFSI), LiC₄F₉SO₃, LiN

(CₓF₂ₓ₊₁SO₂)(C_{y}F_{2y+1}SO₂), where x and y are an integer of about 1 to about 20, lithium trifluoromethane sulfonate, lithium tetrafluoroethanesulfonate, lithium difluorobis(oxalato)phosphate (LiDFOB), and lithium bis(oxalato) borate (LiBOB).

A concentration of the lithium salt may range from about 0.1 M to about 2.0 M. If the lithium salt is included at the above concentration range, an electrolyte may have excellent or suitable performance and lithium ion mobility due to optimal or suitable electrolyte conductivity and viscosity.

### Separator

A separator may be arranged between the positive electrode and the negative electrode depending on a type or kind of a rechargeable lithium battery. The separator may utilize polyethylene, polypropylene, polyvinylidene fluoride, or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including an organic material, an inorganic material, or a (e.g., any suitable) combination thereof on one or both surfaces (e.g., opposite surfaces) of the porous substrate.

The porous substrate may be a polymer film formed of any one selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structure unit derived from (meth)acrylamide and a second structure unit including at least one structure unit derived from (meth)acrylic acid or (meth)acrylate, or a structure unit derived from (meth)acrylamido sulfonate, or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a (e.g., any suitable) combination thereof, but the present disclosure is not limited thereto. An average particle diameter D₅₀ of the inorganic particles may be about 1 nm to about 2000 nm, for example, about 100 nm to about 1000 nm, or about 100 nm to about 700 nm.

The organic material and an inorganic material may be mixed in one coating layer, or a coating layer including an inorganic material may be stacked over a coating layer including the organic material.

The coating layer(s) may have, respectively, a thickness of about 0.5 µm to about 20 µm, for example, about 1 µm to about 10 µm, or about 1 µm to about 5 µm.

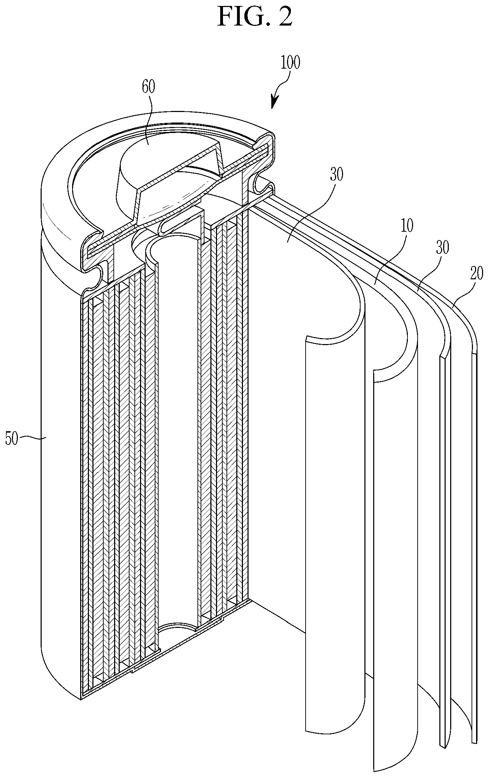

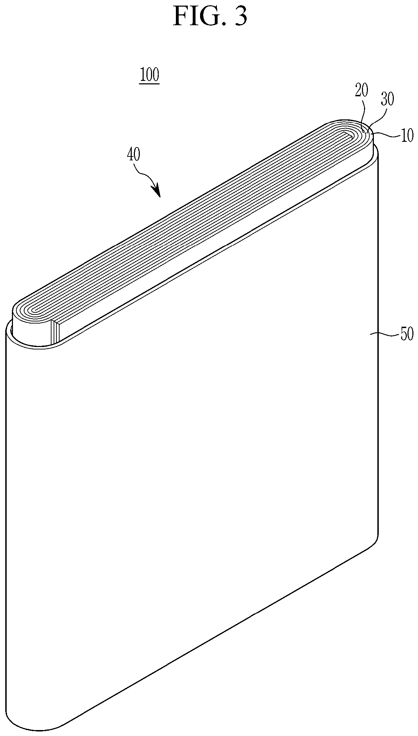

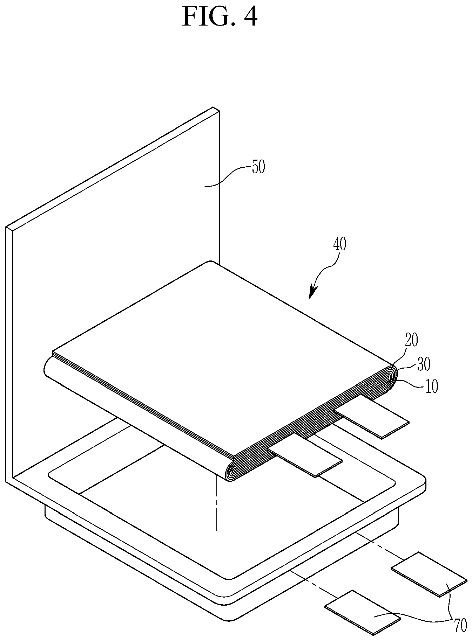

The rechargeable lithium battery may be classified into cylindrical, prismatic, pouch, or coin-type or kind batteries, and/or the like depending on their shape. FIG. 2 to FIG. 4 are schematic views illustrating a rechargeable lithium battery according to one or more embodiments. FIG. 2 shows a cylindrical battery, FIG. 3 shows a prismatic battery, and FIG. 4 shows a pouch-type or kind battery. Referring to FIGs. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2 and may further an electrode tab 70, which may serve as an electrical path for inducing (e.g., conducting) the current formed in the electrode assembly 40 to the outside, as shown in FIG. 4.

Hereinafter, examples of present disclosure and comparative examples are described. These examples, however, are not in any sense to be interpreted as limiting the scope of present disclosure.

### (Example 1)

94 wt% of a mixed negative electrode active material of artificial graphite and Si (95:5 by weight ratio), 0.5 wt% of an agglomerated product, 3 wt% of a styrene-butadiene rubber, and 2.5 wt% of carboxymethyl cellulose were mixed in a water solvent to prepare a negative electrode active material layer slurry.

The agglomerated product was a product in which the porous conductive material particles including pores were agglomerated, which was spherical, and the size of the pores has an average diameter (D50) of 70 nm and the pores of the adjacent porous conductive material particles are interconnected with each other.

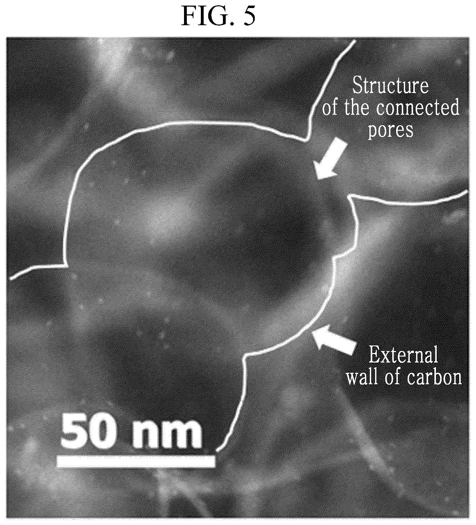

FIG. 5 is a TEM image showing the pores of the agglomerated product utilized in Example 1.

The negative electrode active material layer slurry was coated on a Cu foil current collector, dried, and pressurized to prepare a negative electrode of which capacity per unit area was 4.3 mAh/cm² by a general procedure. 96 wt% of a LiNi_{0.8}Co_{0.95}Al_{0.05}O₂ positive electrode active material, 2 wt% of a polyvinylidene fluoride binder, and 2 wt% of carbon black were mixed in an N-methyl pyrrolidone solvent to prepare a positive electrode active material layer slurry.

The positive electrode active material layer slurry was coated on an Al foil current collector, dried, and pressurized to prepare a positive electrode of which capacity per unit area was 4.3 mAh/cm² by a general procedure.

The negative electrode, the positive electrode, and an electrolyte were utilized to fabricate a pouch rechargeable lithium cell. The electrolyte was prepared by dissolving 1.0 M LiPF₆ in a mixed solvent of ethylene carbonate, ethyl methyl carbonate, and dimethyl carbonate (30:50:20 by volume ratio).

### (Comparative Example 1)

94 wt% of a mixed negative electrode active material of artificial graphite and Si (95:5 by weight ratio), 0.5 wt% of a carbon black conductive material (Manufacturer: TIMCAL), 3 wt% of a styrene-butadiene rubber, and 2.5 wt% of carboxymethyl cellulose were mixed in a water solvent to prepare a negative electrode active material layer slurry.

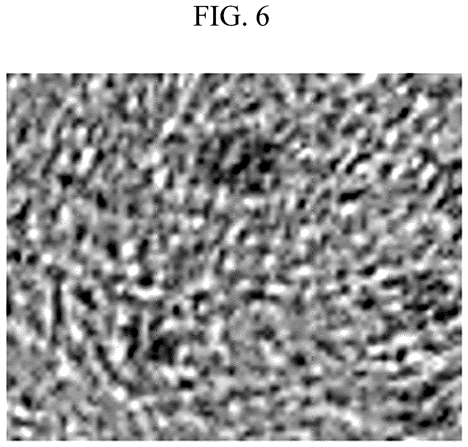

The carbon black conductive material was a material in which pores were not formed inside (e.g., no pores were formed inside the carbon black conductive material particles), and FIG. 6 showed a TEM image of the conductive material utilized in Comparative Example 1.

A negative electrode was prepared by the same procedure as in Example 1, except that the negative electrode active material layer slurry was utilized.

The negative electrode, and the positive electrode and the electrolyte utilized in Example 1 were utilized to fabricate a pouch rechargeable lithium cell. Experimental Example 1) TEM image

The TEM images for the conductive materials utilized in Example 1 and Comparative Example 1 are shown in FIG. 5 and FIG. 6, respectively.

In FIG. 5, the white color represents carbon and the black color represents pores, and such pores were interconnected, so it was found that the conductive material utilized in Example 1 has a structure in which pores with an average particle diameter (D50) of 70 nm were interconnected.

Whereas, as shown in FIG. 6, the conductive material utilized in Comparative Example 1 was without any substantially pores, which was commercially available. and was found that there are no pores therein. Experimental Example 2) Evaluation high-rate charge and discharge characteristics

The half-cells according to Example 1 and Comparative Example 1 were charged from 1^{st} to 5^{th} (e.g., act or task) step under the following conditions. Charge from 1^{st} (e.g., act or task) step to 5^{th} (e.g., act or task) step refers as one charge cycle.

1st (e.g., act or task) step: 5.0 C charge, 2 minutes cut-off or 4.25 V cut-off

2nd (e.g., act or task) step: 3.0 C charge, 2 minutes cut-off or 4.25 V cut-off

3rd (e.g., act or task) step: 2.0 C charge, 3 minutes cut-off or 4.25 V cut-off

4th (e.g., act or task) step: 1.0 C charge, 3 minutes cut-off or 4.25 V cut-off

5th (e.g., act or task) step: 0.5 C charge, 5 minutes cut-off 4.25 V cut-off

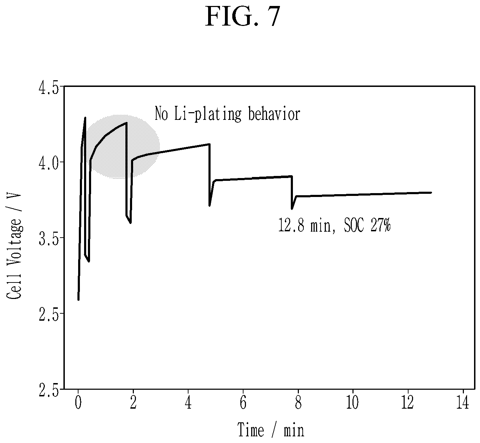

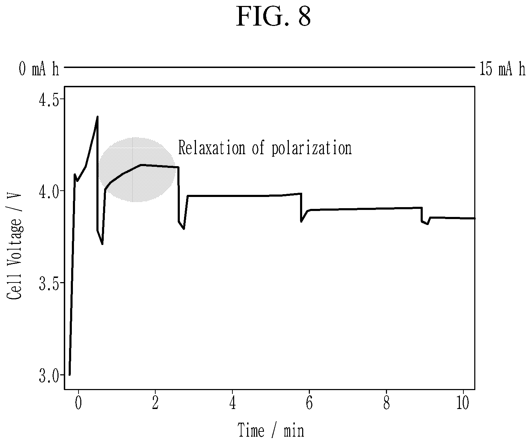

The cell voltages were measured according to the charge. The result of Example 1 is shown in FIG. 7 and the result of Comparative Example 1 is shown in FIG. 8. As shown in FIG. 7, lithium dendrites did not occur in the cell of Example 1 (no Li-plating behavior), so that the charging was proceeded for 12.8 minutes to SOC (State of Charge) 27% (charged to be 27 % of charge capacity based on 100 % of entire battery charge capacity, if (e.g., when) the cell was charged and discharged at 2.75 V to 4.25 V).

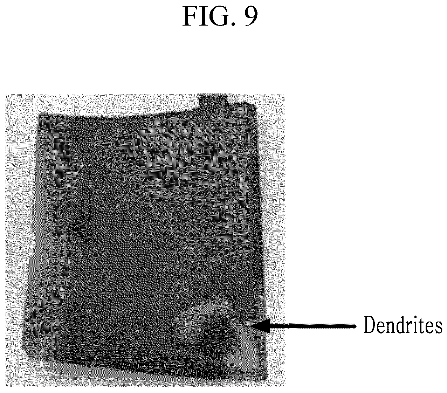

Whereas, as shown in FIG. 8, the cell of Comparative Example 1 exhibited a voltage rise and fall (relaxation of polarization), if (e.g., when) it was charged for 0.5 minutes to 3 minutes in 2^{nd} (e.g., act or task) step, indicating formation of lithium precipitates. From this result, it can be seen that it is difficult to operate the cell of Comparative Example 1 as a rechargeable lithium cell. For example, the cell voltage was rapidly decreased so that it was no longer operating as a cell at SOC 30% (charged to be 30 % of charge capacity based on 100 % of entire battery charge capacity, if (e.g., when) the cell was charged and discharged at 2.75 V to 4.25 V). The negative electrode was separated from the charged cell and then the surface was checked to obtain FIG. 9, which showed that lithium precipitates, for example, lithium dendrites were formed on the surface of the negative electrode. Experimental Example 3) Evaluation of cycle-life characteristic and coulombic efficiency

The cells of Example 1 and Comparative Example 1 were charged and discharged at 5 C for 100 cycles, and then the charge capacity and the discharge capacity were measured. A coulombic efficiency, which was a ratio of discharge capacity relative to charge capacity was calculated and a ratio of discharge capacity at each cycle relative to discharge capacity at 1^{st} cycle was calculated.

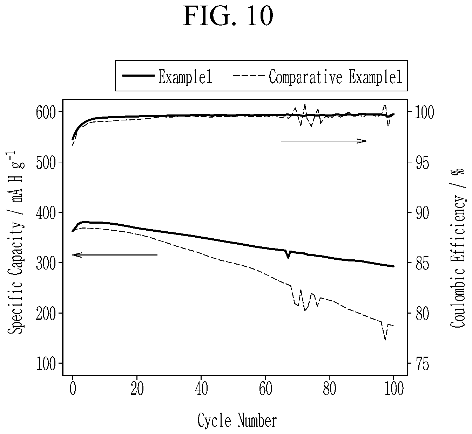

The results are shown in FIG. 10. As shown in FIG. 10, the cell of Example 1 exhibited a high capacity retention of approximately 85 %, even after 5 C high-rate charging and discharging 100 cycles, but the cell of Comparative Example 1 exhibited low capacity retention of approximately 77 %.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments, but, on the contrary, is intended to cover various modifications and equivalent arrangements included within the spirit and scope of the appended claims, and equivalents thereof.

## Claims

1. A negative electrode (20) comprising:
a negative electrode active material layer comprising:
an agglomerated product, the agglomerated product where at least two porous conductive material particles having pores (3) are agglomerated; and
a negative electrode active material,
wherein pores (3) of adjacent porous conductive material particles within the agglomerated product are interconnected with each other, and
wherein the negative electrode (20) is for a rechargeable lithium battery (100).

2. The negative electrode (20) as claimed in claim 1, wherein the pores (3) have an average diameter of about 10 nm to about 150 nm.

3. The negative electrode (20) as claimed in claim 1 or 2, wherein the pores (3) have an average diameter of about 30 nm to about 150 nm.

4. The negative electrode (20) as claimed in any of the claims 1 to 3, wherein the agglomerated product is about 5 wt% or less in amount based on a total 100 wt% of the negative electrode active material layer.

5. The negative electrode (20) as claimed in any of the claims 1 to 4, wherein the agglomerated product is about 0.1 wt% to about 5 wt% or less in amount based on the total 100 wt% of the negative electrode active material layer.

6. The negative electrode (20) as claimed in any of the claims 1 to 5, wherein the negative electrode active material comprises a carbon-based active material, a Si-based active material, or a combination thereof.

7. The negative electrode (20) as claimed in any of the claims 1 to 6, wherein the negative electrode (20) has a capacity per unit area of about 3.5 mAh/cm² or more.

8. The negative electrode (20) as claimed in any of the claims 1 to 7, wherein the negative electrode (20) has a capacity per unit area of about 4.0 mAh/ cm² to about 10.0 Ah/ cm².

9. The negative electrode (20) as claimed in any of the claims 1 to 8, wherein the porous conductive material particles comprise a carbonaceous material.

10. The negative electrode (20) as claimed in any of the claims 1 to 9, wherein the agglomerated product is spherical in shape.

11. A rechargeable lithium battery (100), comprising:
the negative electrode (20) as claimed in any of the claims 1 to 10
a positive electrode (20) comprising a positive electrode active material; and
an electrolyte (30).
